# EUROPEAN PATENT SPECIFICATION

(11) **EP 2 061 110 B1**
(45) Date of publication and mention of the grant of the patent: **10.07.2013**
(21) Application number: 07806300.5
(22) Date of filing: 23.08.2007
(51) Int. Cl.: H01M 8/02, H01M 8/10

(54) **REINFORCED ELECTROLYTE MEMBRANE FOR FUEL CELL, METHOD FOR PRODUCTION THEREOF, MEMBRANE-ELECTRODE ASSEMBLY FOR FUEL CELL, AND SOLID POLYMER-TYPE FUEL CELL HAVING THE ASSEMBLY**
VERSTÄRKTE ELEKTROLYTMEMBRAN FÜR EINE BRENNSTOFFZELLE, HERSTELLUNGSVERFAHREN DAFÜR, MEMBRANELEKTRODENANORDUNG FÜR EINE BRENNSTOFFZELLE UND FESTPOLYMERBRENNSTOFFZELLE MIT DER ANORDNUNG
MEMBRANE D'ÉLECTROLYTE RENFORCÉE POUR UNE PILE À COMBUSTIBLE, PROCÉDÉ POUR SA FABRICATION, ENSEMBLE MEMBRANE-ÉLECTRODE POUR UNE PILE À COMBUSTIBLE ET PILE À COMBUSTIBLE DE TYPE POLYMÈRE SOLIDE AYANT L'ENSEMBLE

(30) Priority: 28.08.2006 JP 2006230556
(43) Date of publication of application: 20.05.2009
(73) Proprietor: TOYOTA JIDOSHA KABUSHIKI KAISHA, Toyota-shi, Aichi-ken, 471-8571 (JP)
(72) Inventor: TAKESHITA, Shinya, Toyota-shi, Aichi 471-8571 (JP)
(74) Representative: Kuhnen & Wacker
(86) International application number: PCT/JP2007/066823
(87) International publication number: WO 2008/026666

(56) References cited:
- WO-A2-2008/054420
- JP-A- 04 500 835
- JP-A- 2005 005 232
- JP-A- 2005 267 904
- JP-A- 2006 099 999
- JP-A- 2006 102 568
- JP-A- 2006 107 914
- JP-A- 2006 128 095
- US-A1- 2005 260 464

## Description

### Technical Field

The present invention relates to a reinforced electrolyte membrane to be used for fuel cells, a method for producing the membrane, a membrane-electrode assembly for fuel cells, and a polymer electrolyte fuel cell comprising the assembly.

### Background Art

Polymer electrolyte fuel cells have a structure comprising a solid polymer electrolyte membrane as an electrolyte and electrodes bonded to both sides of this membrane.

The polymer solid electrolyte membrane must have low membrane resistance within itself when it is used in a fuel cell. Therefore, it is desired that such membrane be as thin as possible. However, a solid polymer electrolyte membrane with too thin a membrane has been problematic in that: pinholes occur during membrane production; the membrane is torn or broken during electrode formation; and a short circuit easily occurs between the electrodes. Moreover, a solid polymer electrolyte membrane used in a fuel cell is always used in a wet state. Therefore, such a solid polymer electrolyte membrane tends to have reliability problems, such as pressure resistance or cross-leaks during differential pressure operation, resulting from swelling, deformation, and the like of the polymer membrane caused by wetting.

Hence an electrolyte membrane for fuel cells that is reinforced with a porous support has been developed.

Meanwhile, fluoride-based and hydrocarbon-based electrolyte membranes that are used for polymer electrolyte fuel cells become thinner when electrolyte polymers deteriorate due to OH radicals generated upon generation of electric power. A means for suppression of such deterioration involves adding a radical scavenger represented by CeO₂ to a catalyst layer or a diffusion layer of MEA, so as to improve the resistance of MEA to radicals.

In this case, the radical scavenger added to the catalyst layer or the diffusion layer migrates into the membranes with time. Aside from this, there is a method that involves adding a radical scavenger directly to electrolyte membranes. Furthermore, for the purpose of obtaining a membrane electrode assembly (MEA) for fuel cells capable of suppressing OH radical attack against a proton ion conductive solid polymer membrane and retaining stable performance for a long time, JP Patent Publication (Kokai) No. 2005-190752 A discloses an invention relating to a membrane electrode assembly in which: a catalyst layer side of a gas diffusion electrode provided with a catalyst layer and a gas diffusion layer is arranged to be the solid polymer membrane side on both faces of the proton-ion conductive solid polymer membrane; and a protective layer containing a component for improving oxidation resistance, such as a radical scavenger or a hydroperoxide decomposer, in a polymer material is interposed at the joined face between the solid polymer membrane and the catalyst layer.

However, such conventional art is problematic in that a radical scavenger is not immobilized within the MEA, so that the effects of exertion of radical resistance are lowered when additives leak outside the MEA due to membrane swelling, flooding, or the like.

Specifically, a radical scavenger is not immobilized within an MEA. At the time of electric power generation, movement of water, such as membrane swelling, membrane contraction, or flooding due to generated water, constantly takes place within the MEA due to electrophoresis of water or drying and wetting. When an additive is not immobilized, a radical scavenger migrates within the MEA via the movement of water, so as to leak out from the MEA.

Further documents relate to fuel cells, membranes for polymer electrolyte fuel cells, or materials used for such membranes. As such, the WO 2008/054420 A2 discloses ionomeric polymers that are chemically stabilized and contain inorganic fillers, which polymers show a reduced degradation. The disclosed ionomers can be used for membranes and electrochemical cells. The US 2005/0260464 A1 relates to a process for increasing the ion exchange membranes resistance to peroxide radical attack in a fuel cell environment comprising the use of catalytically active components capable of decomposing hydrogen peroxide as well as a method for preparing a catalytically active component for use therein. The JP 2005-005232 discloses a membrane electrolyte assembly and solid polymer electrolyte fuel cells using the same. JP 2004-075012 relates to a solid polymer fuel cell having an electrolyte membrane-electrode assembly composed of an iron conductive electrolyte membrane, a pair of electrodes arranged on both sides of the electrolyte membrane, and separators interposing the electrolyte membrane-electrode assembly at both sides thereof. The JP 2006-107914 relates to an electrolyte film for solid polymer fuel cells, manufacturing methods of the same, and film-electrode junctions for solid polymer fuel cells. As a further prior art document, the JP 04500835 is mentioned.

### Disclosure of the Invention

An object of the present invention is to provide a solid polymer electrolyte membrane that is capable of suppressing a radical scavenger from leaking outside of the system and has good chemical durability, and to provide a method for producing the same. Another object of the present invention is to provide a membrane-electrode assembly for fuel cells with improved chemical durability. Still another object of the present invention is to provide a polymer electrolyte fuel cell that has high electric power generation performance and good chemical durability by the use of such membrane-electrode assembly.

The present inventor has discovered that the above objects can be achieved by immobilizing a radical scavenger in a porous membrane of a reinforced electrolyte membrane, thereby achieving the present invention.

Specifically, a first aspect of the present invention is an invention of an electrolyte membrane for a fuel cell according to claim 1, which is reinforced with a porous membrane, in which a radical scavenger is immobilized in the porous membrane.

An example of the form of immobilization is, first, a form in which the radical scavenger is interposed within the porous membrane. Here, the expression, "a form in which the radical scavenger is interposed within the porous membrane," means that a radical scavenger adheres to a porous material forming the porous membrane. That is, examples of such form include a state in which a radical scavenger is implanted within the network structure of the porous membrane, a state in which a radical scavenger is embedded in the porous membrane, and a state in which a radical scavenger is sandwiched between meshes of the porous membrane.

Here, the term "immobilization" refers to, as described above, not only a case in which a radical scavenger remains on-site because of the porous material forming the porous membrane, but also a case in which a radical scavenger is adhered to the porous membrane with the use of an adhesive.

The hardness of a porous material forming the porous membrane is preferably of a lesser degree than that of the radical scavenger, since the radical scavenger is easily interposed within the porous membrane.

Furthermore, the mean particle size of the radical scavenger is larger than the mean pore size of the porous membrane in order to achieve immobilization of a radical scavenger in a porous membrane. This is because the radical scavenger is easily caught in the meshes of the porous membrane, so that the leaking of the radical scavenger outside of the system can be suppressed.

As a radical scavenger to be used in the reinforced electrolyte membrane for a fuel cell of the present invention, in particular an inorganic or an organic compound having radical scavenging ability is widely used from among those added as antioxidation agents in various materials. Among them, one or more of radical scavenger selected from the group consisting of CeO₂, Ru, Ag, RuO₂, WO₃, Fe₃O₄, CePO₄, CrPO₄, AlPO₄, FePO₄, CeF₃, FeF₃, Fe-porphine, and Co-porphine are used according to the invention.

When a radical scavenger to be used in the reinforced electrolyte membrane for a fuel cell of the present invention is immobilized within a porous membrane, the particle size is preferably 100 µm or less and is more preferably 1 µm or less. Immobilization of a radical scavenger having a small particle size enables high dispersion of the radical scavenger in a PTFE porous membrane when a PTFE tape or the like is stretched.

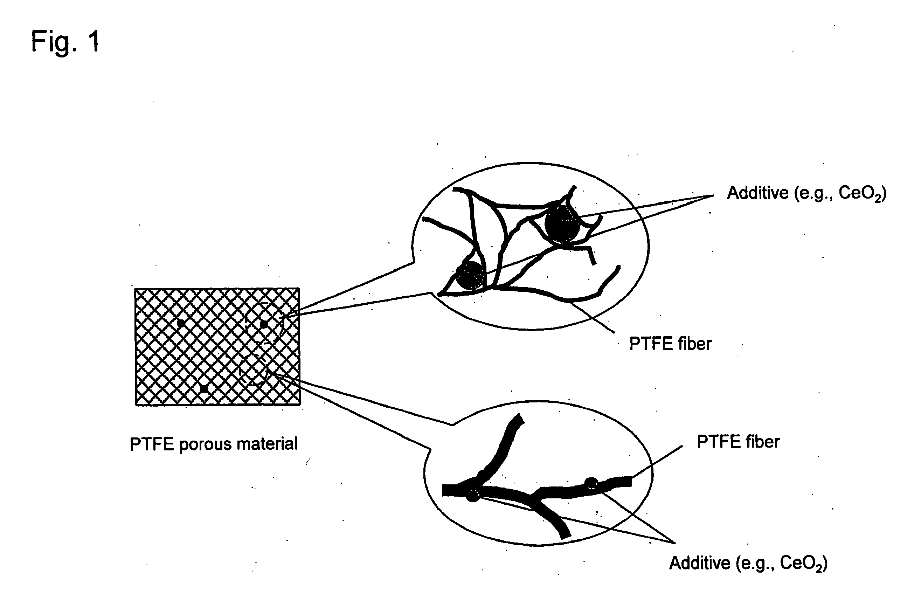

When the particle size of a radical scavenger is 1 µm or less, the radical scavenger is caught in the pores of the porous membrane and thus immobilized or is embedded within the fibers of the porous membrane and thus immobilized. Figure 1 schematically shows a state in which a radical scavenger is embedded within the fibers of the porous membrane and a state in which a radical scavenger is caught in the pores of the porous membrane and thus immobilized.

As porous membranes, those known as reinforced membranes for fuel cells can be used widely. For example, porous substrates made of fluorine-based resins having good strength and good shape stability, such as polytetrafluoroethylene, a polytetrafluoroethylene-chlorotrifluoroethylene copolymer, polychlorotrifluoroethylene, polybromotrifluoroethylene, a polytetrafluoroethylene-bromotrifluoroethylene copolymer, a polytetrafluoroethylene-perfluorovinylether copolymer, or polytetrafluoroethylene-hexafluoropropylene copolymer, are preferably used. The degree of polymerization or the molecular weight of such a fluorine-based resin is not particularly limited. In view of strength, shape stability, and the like, the weight-average molecular weight of such a fluorine-based resin preferably ranges from approximately 10,000 to 10,000,000. Among these examples, a preferable example of a membrane substrate is polytetrafluoroethylene (PTFE), which can be easily made porous by drawing.

Specifically, a second aspect of the present invention is represented by claim 4, which relates to a method for producing an electrolyte membrane for a fuel cell that is reinforced with a porous membrane wherein a radical scavenger is immobilized in the porous membrane. The method for producing an electrolyte membrane for a fuel cell comprises at least the steps of kneading a porous material for the formation of the porous membrane with the radical scavenger and compression-molding the thus kneaded product. A state in which a radical scavenger is immobilized in the above porous membrane can be created by kneading a porous material for the formation of the porous membrane with the radical scavenger.

The production method is a method that comprises the steps of kneading the raw material powders or pellets for a porous membrane with a radical scavenger, compression-molding the thus kneaded product e.g. to form a tape, and then optionally stretching the tape to make it porous. By the addition of a radical scavenger during the step of producing a porous membrane, the reinforced membrane can continuously have its own radical trapping function. Furthermore, according to the present invention, an electrolyte membrane for a fuel cell in which a radical scavenger is immobilized in a porous membrane can be produced without forming a tape or stretching a tape, depending on the selection of the porous material.

Specific examples of a radical scavenger, CeO₂ as a preferable example of such radical scavenger, specific examples of a raw material for a porous membrane, and polytetrafluoroethylene (PTFE) as a preferable example of such raw material are as described above.

A fourth aspect of the present invention is represented by claim 7, which relates to a membrane-electrode assembly (MEA) for a fuel cell comprising the above reinforced electrolyte membrane for a fuel cell, which contains a pair of electrodes comprising a fuel electrode to which a fuel gas is supplied and an oxygen electrode to which an oxidizing agent gas is supplied and a polymer electrolyte membrane sandwiched between the pair of electrodes. The electrolyte membrane for a fuel cell is characterized in that the polymer electrolyte membrane is reinforced with the above porous membrane and the radical scavenger is immobilized in the porous membrane.

A fifth aspect of the present invention is represented by claim 8, which relates to a polymer electrolyte fuel cell comprising a membrane-electrode assembly that has an electrolyte membrane for a fuel cell, wherein the electrolyte membrane is reinforced with the above porous membrane and a radical scavenger is immobilized in the porous membrane.

The electrolyte membrane for a fuel cell according to the present invention is provided, in which the electrolyte membrane is reinforced with a porous membrane and a radical scavenger is immobilized in the porous membrane. Specifically, the radical scavenger is present being adhered to or embedded within the porous material. Hence, when the membrane is used as a reinforcement layer for electrolytes, the radical scavenger merely leaks outside of the system, the effect of radical resistance is long lasting, and the membrane can be prevented from becoming thinner due to the leakage of the radical scavenger outside of the system. Furthermore, the method of the present invention for producing an electrolyte membrane for fuel cells, according to which the electrolyte membrane is reinforced with a porous membrane and a radical scavenger is immobilized in the porous membrane, enables high dispersion of the radical scavenger in the porous material by stretching a PTFE tape or the like supplemented with a radical scavenger.

As a result, the electrolyte membrane for a fuel cell of the present invention has improved chemical durability and good mechanical strength, since it is reinforced with a porous membrane. Thus, the durability of the fuel cell can be improved. Furthermore, a polymer electrolyte fuel cell producing high output and having good durability can be obtained by the use of the electrolyte membrane for a fuel cell, in which the electrolyte membrane is reinforced with a porous membrane and a radical scavenger is immobilized in the porous membrane.

### Brief Description of the Drawings

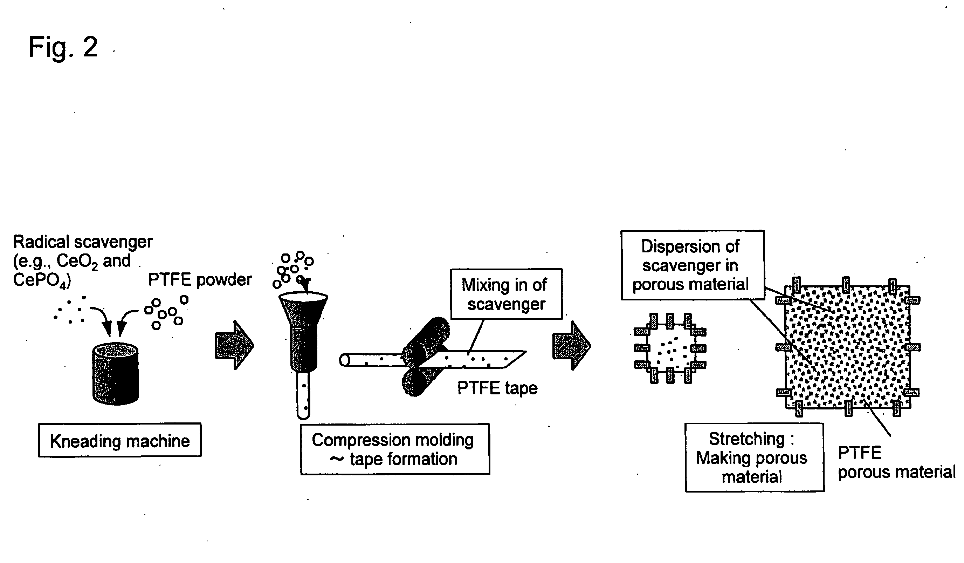

Fig. 1 schematically shows a state in which radical scavengers are embedded within the fibers of a porous membrane and a state in which radical scavengers are caught and immobilized in pores of a porous membrane. Fig. 2 shows an outline of the method of the present invention for producing a reinforced electrolyte membrane for a fuel cell.

### Best Mode for Carrying Out the Invention

The present invention is described as follows according to the outline of the method for producing a reinforced electrolyte membrane for a fuel cell shown in Fig. 2. Raw material powders or pellets of a porous membrane such as PTFE and a radical scavenger such as CeO₂ or CePO₄ are added to a kneading machine, and then the mixture is kneaded. Next, the kneaded product that has been subjected to compression-molding is formed into a tape using a roller. At this time point, the radical scavenger is highly dispersed and mixed in the PTFE tape. Next, the tape is stretched to make it porous. The radical scavenger is immobilized in the porous membrane. As described above, an electrolyte membrane for a fuel cell, in which the electrolyte membrane is reinforced with a porous membrane and a radical scavenger is immobilized in the porous membrane, is easily produced by the addition of the radical scavenger during the step of producing the porous membrane. Moreover, such reinforced membrane itself can continuously have a radical trapping function.

The polymer electrolyte fuel cell of the present invention is a polymer electrolyte fuel cell produced using the above electrolyte membrane of the present invention for a fuel cell, in which a radical scavenger is immobilized in the porous membrane, for a membrane-electrode assembly. The polymer electrolyte fuel cell can be produced to have the constitution of a generally known polymer electrolyte fuel cell, except for using the electrolyte membrane for a fuel cell of the present invention.

The present invention will now be described in more detail with reference to examples and comparative examples.

### [Example 1]

PTFE powders were mixed with 5 wt% CePO₄ powders (mean particle size: 1 µm). After the steps of molding => tape formation ⇒ stretching, a PTFE porous material containing CePO₄ was produced. Nafion solution DE2020 (trade name, DuPont) was casted on the PTFE porous material, so that an electrolyte membrane containing a reinforcement layer was produced (referred to as electrolyte A).

A catalyst layer was transferred to the electrolyte A, carbon paper was used as a diffusion layer, and then MEA was produced (referred to as MEA (A)).

### [Example 2]

PTFE powders were mixed with 5 wt% CePO₄ powders (mean particle size: 0.1 µm). After the steps of molding ⇒ tape formation ⇒ stretching, a PTFE porous material containing CePO₄ was produced. Nafion solution DE2020 (trade name, DuPont) was casted on the PTFE porous material, so that an electrolyte membrane containing a reinforcement layer was produced (referred to as electrolyte B).

A catalyst layer was transferred to the electrolyte A, carbon paper was used as a diffusion layer, and then MEA was produced (referred to as MEA (B)).

### [Comparative example 1]

Aside from the electrolyte membrane A, CePO₄ powders (mean particle size: 1 µm) were dispersed in the same amount as that of the electrolyte membrane A in Nafion solution DE2020 (trade name, DuPont). The dispersion was casted on an additive-free PTFE porous material, so that an electrolyte membrane was produced (referred to as electrolyte C).

A catalyst layer was transferred to the above electrolyte B carbon paper was used as a diffusion layer, and then MEA was produced (referred to as MEA (C)).

### [Comparative example 2]

CePO₄ powders were not added to Nafion solution DE2020 (trade name, DuPont) and a PTFE porous material. CePO₄ was added to a cathode catalyst layer and then MEA was produced using the same (referred to as MEA (D)).

### [Comparative example 3]

Nafion solution DE2020 (trade name, DuPont) was casted on a PTFE porous material and then MEA was produced without adding any additive (referred to as MEA (E)).

### [Performance assessment]

Output voltages at 0.1 A/cm² of the above MEA (A) to (E) were compared by a durability test. Table 1 below shows the results of comparing output voltages.

**Table 1**

| | | Output voltage (V) | | |
|---|---|---|---|---|
| | | Initial | After 1000 hours | After 3000 hours |
| Example 1 | MEA (A) | 0.80 | 0.79 | 0.76 |
| Example 2 | MEA (B) | 0.81 | 0.79 | 0.75 |
| Comparative example 1 | MEA (C) | 0.79 | 0.76 | 0.66 |
| Comparative example 2 | MEA (D) | 0.80 | 0.78 | 0.70 |
| Comparative example 3 | MEA (E) | 0.82 | 0.45 | - |

As can be noted in the results in Table 1, both MEA (A) and MEA (B) (produced in Examples using the electrolyte membrane for a fuel cell, in which the electrolyte membrane had been reinforced with the porous membrane and the radical scavenger had been immobilized in the porous membrane) were equivalent to MEA (C) (produced using the electrolyte membrane for a fuel cell of Comparative example 1, in which no radical scavenger had been immobilized), MEA (D) (produced using the electrolyte membrane for a fuel cell of Comparative example 2, in which the radical scavenger had been added not to a porous membrane but to a cathode catalyst layer), and MEA (E) (produced without using the electrolyte membrane for a fuel cell of Comparative example 3, in which no radical scavenger had been immobilized) in terms of initial output voltage. Furthermore, both MEA (A) and MEA (B) maintained the initial output voltages longer than MEA (C), MEA (D), and MEA (E). According to the present invention, a radical scavenger adheres to or is embedded in a porous material, so that the radical scavenger merely leaks outside of the system, the effect of radical resistance is maintained, and the durability of the fuel cell is significantly improved.

### Industrial Applicability

The electrolyte membrane for a fuel cell of the present invention is reinforced with a porous membrane and a radical scavenger is immobilized in the porous membrane. Hence, a polymer electrolyte fuel cell having high output and good durability can be obtained with the use of the electrolyte membrane for a fuel cell, thereby contributing to practical application and the spread of fuel cells.

## Claims

1. A reinforced electrolyte membrane for a fuel cell, wherein
the electrolyte membrane is reinforced with a porous membrane and
a radical scavenger is immobilized in the porous membrane by interposing the radical scavenger in the porous membrane,wherein the radical scavenger is one more selected from the group consisting of CeO₂, Ru, Ag, RuO₂, WO₃, Fe₃O₄, CePO₄, CrPO₄, AlPO₄, FePO₄, CeF₃, FeF₃, Fe-porphine, and Co-porphine, **characterized in that** the mean particle size of the radical scavenger is larger than the mean pore size of the porous membrane.

2. The reinforced electrolyte membrane for a fuel cell according to claim 1, wherein hardness of a porous material for the formation of the porous membrane is of a lesser degree than that of the radical scavenger.

3. The reinforced electrolyte membrane for a fuel cell according to any one of claims 1 or 2, wherein the porous membrane is a polytetrafluoroethylene (PTFE) membrane.

4. A method for producing a reinforced electrolyte membrane for a fuel cell according to any one of claims 1 to 3 wherein the electrolyte membrane is reinforced with a porous membrane and a radical scavenger is immobilized in the porous membrane, the method comprising at least the steps of
kneading raw material powder or pellets for the formation of the porous membrane with the radical scavenger
wherein the radical scavenger is one more selected from the group consisting of CeO₂, Ru, Ag, RuO₂, WO₃, Fe₃O₄, CePO₄, CrPO₄, AlPO₄, FePO₄, CeF₃, FeF₃, Fe-porphine, and Co-porphine;and
compression-molding a kneaded product; **characterized in that** the mean particle size of the radical scavenger is larger than the mean pore size of the porous membrane.

5. The method for producing a reinforced electrolyte membrane for a fuel cell according to claim 4, wherein the step of compression molding the kneaded product is the step of forming a tape by compression molding of the kneaded product and the method comprises the step of stretching the tape to make it porous.

6. The method for producing a reinforced electrolyte membrane for a fuel cell according to any one of claims 4 or 5, wherein a raw material of the porous membrane is polytetrafluoroethylene (PTFE).

7. A membrane-electrode assembly for a fuel cell comprising a pair of electrodes composed of a fuel electrode to which a fuel gas is supplied and an oxygen electrode to which an oxidizing agent gas is supplied and a polymer electrolyte membrane sandwiched between the pair of electrodes, wherein the polymer electrolyte membrane is the reinforced electrolyte membrane for a fuel cell according to any one of claims 1 to 3.

8. A polymer electrolyte fuel cell comprising a membrane-electrode assembly having the reinforced electrolyte membrane for a fuel cell according to any one of claims 1 to 3.

## Patentansprüche

1. Verstärkte Elektrolytmembran für eine Brennstoffzelle, wobei
die Elektrolytmembran mit einer porösen Membran verstärkt ist und
ein Radikalfänger in der porösen Membran durch Einlagern des Radikalfängers in die poröse Membran immobilisiert ist, wobei der Radikalfänger eines oder mehrere ist, ausgewählt aus der Gruppe, die aus CeO₂, Ru, Ag, RuO₂, WO₃, Fe₃O₄, CePO₄, CrPO₄, AlPO₄, FePO₄, CeF₃, FeF₃, Fe-Porphin und Co-Porphin besteht, **dadurch gekennzeichnet, dass** die durchschnittliche Partikelgröße des Radikalfängers größer ist als die durchschnittliche Porengröße der porösen Membran.

2. Verstärkte Elektrolytmembran für eine Brennstoffzelle nach Anspruch 1, wobei die Härte eines porösen Materials zum Bilden der porösen Membran einen geringeren Grad aufweist als die des Radikalfängers.

3. Verstärkte Elektrolytmembran für eine Brennstoffzelle nach einem der Ansprüche 1 bis 2, wobei die poröse Membran eine Polytetrafluorethylen (PTFE) Membran ist.

4. Verfahren zum Herstellen der verstärkten Elektrolytmembran für eine Brennstoffzelle nach einem der Ansprüche 1 bis 3, wobei die Elektrolytmembran mit einer porösen Membran verstärkt ist und ein Radikalfänger in der porösen Membran immobilisiert ist, wobei das Verfahren mindestens die Schritte umfasst: Kneten von Rohmaterialpulver oder -pellets zur Bildung der porösen Membran mit dem Radikalfänger,
wobei der Radikalfänger eines oder mehrere ist, ausgewählt aus der Gruppe, die aus CeO₂, Ru, Ag, RuO₂, WO₃, Fe₃O₄, CePO₄, CrPO₄, AlPO₄, FePO₄, CeF₃, FeF₃, Fe-Prohin und Co-Porphin; und
Formpressen eines gekneteten Produkts; **dadurch gekennzeichnet, dass** die durchschnittliche Partikelgröße des Radikalfängers größer als die durchschnittliche Porengröße der porösen Membran ist.

5. Verfahren zum Herstellen der verstärkten Elektrolytmembran für eine Brennstoffzelle nach Anspruch 4, wobei der Schritt des Formpressens des gekneteten Produkts ein Schritt des Bildens eines Bandes durch Formpressen des gekneteten Produkts ist und wobei das Verfahren den Schritt des Verstreckens des Bandes umfasst, um es porös zu machen.

6. Verfahren zum Herstellen der verstärkten Elektrolytmembran für eine Brennstoffzelle nach einem der Ansprüche 4 oder 5, wobei das Rohmaterial der porösen Membran Polytetrafluorethylen (PTFE) ist.

7. Eine Membranelektrodenanordnung für eine Brennstoffzelle, die ein Elektrodenpaar umfasst, das aus einer Brennstoffzellenelektrode besteht, zu der ein Brenngas zugeführt wird, und einer Sauerstoffelektrode, zu der ein Oxidationsmittelgas zugeführt wird, und eine Polymerelektrolytmembran, die zwischen dem Elektrodenpaar angeordnet ist, wobei die Polymerelektrolytmembran die verstärkte Elektrolytmembran für eine Brennstoffzelle nach einem der Ansprüche 1 bis 3 ist.

8. Polymerelektrolytbrennstoffzelle, die eine Membranelektrodenanordnung umfasst, welche die verstärkte Elektrolytmembran für eine Brennstoffzelle nach einem der Ansprüche 1 bis 3 aufweist.

## Revendications

1. Membrane d'électrolyte renforcée pour une pile à combustible, dans laquelle
la membrane d'électrolyte est renforcée avec une membrane poreuse et
un fixateur de radical est immobilisé dans la membrane poreuse par intercalement du fixateur de radical dans la membrane poreuse, dans laquelle le fixateur de radical est un ou plusieurs choisis dans le groupe constitué de CeO₂, Ru, Ag, RuO₂, WO₃, Fe₃O₄, CePO₄, CrPO₄, AlPO₄, FePO₄, CeF₃, FeF₃, Fe-porphine, et Co-porphine, **caractérisée en ce que** la taille moyenne de particules du fixateur de radical est supérieure à la taille moyenne de pore de la membrane poreuse.

2. Membrane d'électrolyte renforcée pour une pile à combustible selon la revendication 1, dans laquelle la dureté d'un matériau poreux pour la formation de la membrane poreuse est d'un degré inférieur à celui du fixateur de radical.

3. Membrane d'électrolyte renforcée pour une pile à combustible selon l'une quelconque des revendications 1 ou 2, dans laquelle la membrane poreuse est une membrane de polytétrafluoroéthylène (PTFE).

4. Procédé de production d'une membrane d'électrolyte renforcée pour une pile à combustible selon l'une quelconque des revendications 1 à 3, dans laquelle la membrane d'électrolyte est renforcée avec une membrane poreuse et un fixateur de radical est immobilisé dans la membrane poreuse, le procédé comprenant au moins les étapes consistant :
à malaxer une poudre ou des boulettes de matière première pour la formation de membrane poreuse avec le fixateur de radical
dans lequel le fixateur de radical est un ou plusieurs choisis dans le groupe constitué de CeO₂, Ru, Ag, RuO₂, WO₃, Fe₃O₄, CePO₄, CrPO₄, AlPO₄, FePO₄, CeF₃, FeF₃, Fe-porphine, et Co-porphine ; et
à mouler par compression un produit malaxé ; **caractérisé en ce que** la taille moyenne de particule du fixateur de radical est supérieure à la taille moyenne de pore de la membrane poreuse.

5. Procédé de production d'une membrane d'électrolyte renforcée pour une pile à combustible selon la revendication 4, dans lequel l'étape de moulage par compression du produit malaxé est l'étape consistant à former une bande par moulage par compression du produit malaxé et le procédé comprend l'étape consistant à étirer la bande pour la rendre poreuse.

6. Procédé de production d'une membrane d'électrolyte renforcée pour une pile à combustible selon l'une quelconque des revendications 4 ou 5, dans lequel une matière première de la membrane poreuse est le polytétrafluoroéthylène (PTFE).

7. Assemblage de membrane-électrode pour une pile à combustible comprenant une paire d'électrodes constituée d'une électrode à combustible dans laquelle un gaz de combustible est introduit et une électrode à oxygène dans laquelle un agent oxydant gazeux est introduit et une membrane d'électrolyte polymère prise en sandwich entre la paire d'électrodes, dans lequel la membrane d'électrolyte polymère est la membrane d'électrolyte renforcée pour une pile à combustible selon l'une quelconque des revendications 1 à 3.

8. Pile à combustible à électrolyte polymère comprenant un assemblage de membrane-électrode présentant la membrane d'électrolyte renforcée pour une pile à combustible selon l'une quelconque des revendications 1 à 3.
